Europäisches Patentamt

European Patent Office

Office européen des brevets

(19)

(11) Numéro de publication: **0 348 293**
**A1**

## (12) DEMANDE DE BREVET EUROPEEN

(21) Numéro de dépôt: **89401732.6**

(22) Date de dépôt: **20.06.89**

(51) Int. Cl.⁴: **G 06 F 15/20**

(30) Priorité: **22.06.88 FR 8808381**

(43) Date de publication de la demande:
**27.12.89 Bulletin 89/52**

(84) Etats contractants désignés:
**AT BE CH DE ES FR GB GR IT LI LU NL SE**

(71) Demandeur: **BULL S.A.**
**121, Avenue de Malakoff**
**F-75116 Paris (FR)**

(72) Inventeur: **Texier, Michel**
**29, Rue Prosper Legoute**
**F-92160 Antony (FR)**

(74) Mandataire: Debay, Yves et al
**25, avenue de la Grande Armée PC-4X018**
**F-75016 Paris (FR)**

(54) **Procédé pour la génération de fenêtres de dialogue visualisables sur l'écran d'un système informatique et dispositif pour mettre en oeuvre ce procédé.**

(57) Procédé pour la génération de fenêtres de dialogue visualisables sur l'écran d'un système informatique travaillant en mode graphique multi-fenêtres, le procédé étant caractérisé en ce qu'il comporte les opérations suivantes :

1. On organise le formulaire en une ou plusieurs pages matérialisables chacune par une fenêtre d'écran,

2. On définit dans une page, au moins une zone active, page ou partie de page (P1 à P7), susceptible de réagir à un évènement extérieur,

3. On associe à ladite zone active un ensemble de fonctions "éditeur", comportant au moins une fonction de réaction de la zone active à une activation par un évènement extérieur. L'invention est applicable à la génération de masques de saisie et/ou d'affichage de données. L'invention concerne également un dispositif pour mettre en oeuvre le procédé défini ci-dessus.

FIG.1

**Description**

## PROCEDE POUR LA GENERATION DE FENETRES DE DIALOGUE VISUALISABLES SUR L'ECRAN D'UN SYSTEME INFORMATIQUE ET DISPOSITIF POUR METTRE EN OEUVRE CE PROCEDE.

La présente invention concerne la génération de fenêtres de dialogue visualisables sur l'écran d'un système informatique et utilisables à titre d'interface-utilisateur dans diverses applications telles que fiches, tableaux de bord, menus, masques de saisie ou d'affichage de données, boîtes de dialogues, etc ... Une application très fréquente de telles fenêtres de dialogue est constituée par l'émulation interactive à l'écran de véritables formulaires comportant en général des éléments fixes regroupés dans un squelette et des zones actives, notamment des zones de remplissage, susceptibles de recevoir selon une structure prédéfinie des informations variables tant de l'utilisateur que du système informatique. Pour cette raison, les fenêtres de dialogue concernées par l'invention, seront également appelées indifféremment formulaires sans pour autant donner à ce terme le sens restrictif énoncé ci-dessus. En particulier le terme formulaire pourra recouvrir en outre toute présentation structurée et interactive visualisable à l'écran d'informations quelconques tant en entrée qu'en sortie notamment celles résultant d'évènements extérieurs permettant l'activation de certaines zones de l'écran et transmis par l'intermédiaire d'un clavier et/ou d'un dispositif de pointage tel une souris (par exemple, la sélection d'un choix dans un menu, le déclenchement d'une action, etc ...).

Depuis plusieurs années, grâce à l'apparition des stations individuelles de travail et de la micro-informatique, un grand nombre d'utilisateurs non spécialistes ont accès à l'outil informatique sous ses aspects les plus divers, par exemple : banques de données, bureautique, programmes experts, intelligence artificielle. De façon fréquente cet accès est réalisé en mode interactif dans lequel l'utilisateur peut dialoguer avec le système tant en entrée qu'en sortie. Dans ce contexte nouveau, il se trouve que l'utilisateur a un besoin de plus en plus fréquent de formulaires visualisables qui soient susceptibles d'adaptation pour lui permettre de retrouver sur un écran la prodigieuse diversité des documents existants sur son bureau. Bien évidemment cette adaptation doit être relativement aisée pour l'utilisateur et doit en particulier éviter ou réduire les contraintes indésirables dues à l'environnement d'exploitation de l'application-utilisateur à laquelle le formulaire recherché sera ensuite attaché.

L'invention a pour but un procédé de génération de formulaires visualisables sur un écran d'un système informatique et présentant un caractère autonome tout en permettant une génération tant adaptative (autorisant modifications et cheminements variables) qu'évolutive selon le degré d'expérience de l'utilisateur (le procédé s'adressant autant à un utilisateur non-spécialiste qu'au programmeur confirmé qui aura la possibilité de faire un large usage du procédé pour créer des formulaires dans ses programmes d'application).

L'invention propose un procédé pour la génération de fenêtres de dialogue, ci-après appelées formulaires, visualisables sur un écran d'un système informatique comportant une unité centrale et une mémoire centrale chargée d'un logiciel d'exploitation, ledit écran travaillant en mode graphique multi-fenêtres, chaque fenêtre, représentable à l'écran par un contour, étant munie d'un système de coordonnées locales et d'un contexte graphique, le procédé étant caractérisé en ce qu'il comporte les opérations suivantes :

1. On organise le formulaire en une ou plusieurs pages matérialisables chacune par une fenêtre d'écran,

2. On définit dans au moins une page, au moins une zone active, page ou partie de page, susceptible de réagir à au moins une unité d'information constituée par un évènement extérieur,

3. On associe à ladite zone active un ensemble de fonctions, ci-après appelées éditeur, comportant au moins une fonction de réaction de la zone active à une activation par un ou plusieurs évènements extérieurs, notamment le remplissage de ladite zone par de l'information variable, et de façon optionnelle une fonction de validation-éditeur susceptible de valider ladite activation.

Le formulaire ainsi créé présente un caractère autonome marqué (résultant de son mode de génération) car structuré autour d'un module de base constitué par une zone interactive c'est à dire le doublet zone visualisable à l'écran et éditeur incorporant la fonction de réaction de la zone. Ce caractère est encore renforcé par la faculté d'incorporer à l'éditeur une fonction de validation de l'activation, notamment du remplissage de la zone, ce qui permet de contrôler le déclenchement de la réaction. Ainsi généré et structuré le formulaire est aisément portable vers telle ou telle application-utilisateur, d'autant plus facilement que sa structure modulaire autorise des modifications sans difficulté particulière.

Il est à noter que la génération du formulaire peut être rendue encore plus aisée par l'utilisation de la récursivité au niveau page ou partie de page pour définir des sous-zones actives selon le même modèle que celui des zones actives définies précédemment.

Par ailleurs le procédé selon l'invention permet d'obtenir une liaison simple, fiable et facilement controlable avec une application-utilisateur, autant en entrée d'informations de l'écran vers le système qu'en sortie du système vers l'écran.

Selon une première variante du procédé on associe à une zone active, outre son éditeur, au moins une fonction d'action liée avec un programme d'application-utilisateur choisie parmi les suivantes :
- une fonction d'action de post-validation de l'opération de validation de ladite zone active (FAV),
- une fonction d'action de pré-affichage à l'écran d'informations visualisables et contenues dans la zone active (FAA).

D'une façon pratique, la liaison avec l'application-utilisateur se fait au travers de la fonction d'action dont la définition dans le formulaire lui-même peut être réduite au minimum c'est à dire à une identification permettant son appel. Une telle liaison n'altère en rien le caractère autonome et portable du formulaire.

Le procédé selon l'invention admet un grand nombre de variantes présentant des effets avantageux tant au niveau de la génération des formulaires qu'à celui de leur souplesse d'utilisation. Ces variantes seront présentées en détail dans la description qui va suivre. En particulier selon une autre variante du procédé selon l'invention la génération des formulaires est obtenue soit par la création de toutes pièces, soit par la modification ou la reconstruction d'un formulaire préexistant. Selon encore une autre variante le procédé selon l'invention est mis en oeuvre de façon programmée ou de façon interactive par l'utilisation d'un jeu d'instructions spécifiques complémentaires à celles d'un langage de programmation dont l'interface programmée est chargée dans ledit système informatique. Avantageusement le langage de programmation est de type interprété et objet, par exemple un langage LISP possédant une couche objet (permettant la création de structures et de méthodes associées).

L'invention concerne également un dispositif pour la mise en oeuvre d'un procédé de génération de fenêtres de dialogue à l'écran d'un système informatique et comportant:
- un système informatique présentant une unité centrale et une mémoire centrale chargés d'un logiciel d'exploitation,
- ledit système comportant au moins un écran travaillant en mode graphique multi-fenêtres, et au moins un périphérique d'entrée capable de déplacer un pointeur sur ledit écran,
- une interface programmée d'un langage de programmation chargée dans ledit système,
- un ensemble de logiciels développés, au moins en partie, dans ledit langage de programmation en suivant au moins une des spécifications définies par les diverses variantes ici présentées du procédé selon l'invention.

Le procédé selon l'invention est maintenant décrit, à titre d'exemple non limitatif, en se référant aux dessins ci-annexés représentant des vues partielles et schématiques de l'écran d'un système informatique sur lequel est mis en oeuvre le procédé selon l'invention. Plus précisément,
- la figure 1 montre deux formulaires après création,
- la figure 2 montre un formulaire en phase initiale de création en association avec un menu de création de formulaire, et
- la figure 3 montre un formulaire en cours de création en association avec une fenêtre d'information.

Le procédé selon l'invention est mis en oeuvre de façon préférentielle avec un système informatique comportant au moins une unité centrale, une mémoire centrale, un écran, un clavier et un agent périphérique d'entrée susceptible de positionner un pointeur sur l'écran par exemple une souris. Le système comporte en plus des moyens matériels et/ou logiciels pour faire travailler l'écran en mode graphique multi-fenêtres.

La mise en oeuvre du procédé selon l'invention dans toutes ses variantes montrées ci-après, consiste à faire exécuter par le système informatique ainsi défini, un ensemble de programmes d'instructions définis et développés pour réaliser au moins les trois opérations suivantes :
1. L'organisation du formulaire en une ou plusieurs pages matérialisables chacune par une fenêtre d'écran,
2. La définition dans au moins une page, d'au moins une zone active, page ou partie de page, susceptible de réagir à au moins une unité d'information constituée par un évènement extérieur,
3. L'association à ladite zone active d'un ensemble de fonctions, ci-après appelées éditeur, comportant au moins une fonction de réaction de la zone active à une activation par un ou plusieurs évènements extérieurs, notamment le remplissage de ladite zone par de l'information variable, et de façon optionnelle une fonction de validation-éditeur susceptible de valider ladite activation.

Par ailleurs, le système informatique chargé de cet ensemble de programmes constitue un mode de réalisation du dispositif capable de mettre en oeuvre le procédé selon l'invention notamment dans toutes ses variantes présentées ci-après.

Il est intéressant de remarquer que le procédé ainsi que le dispositif selon l'invention permettent l'obtention d'un effet technique certain à savoir soit l'apparition sur l'écran d'une zone de dialogue interactive (formulaire) soit l'écriture physique en mémoire centrale d'informations codées sous la forme de signaux électriques et représentatives en bloc de la structure de définition du formulaire.

Bien entendu l'invention n'est pas limitée à l'implémentation particulière qui va être décrite ci-après, c'est à dire au type de matériel utilisé ou au standard du langage de programmation utilisé (ici le standard LISP). En particulier le standard PROLOG pouvant offrir une couche objet est également intéressant pour la mise en oeuvre du procédé selon l'invention. De plus, dans la mesure où l'on désire mettre en oeuvre le procédé selon l'invention en mode interactif, il est nécessaire d'utiliser un langage dit interprété c'est à dire permettant l'interprétation directe par la machine de chaque instruction.

Dans le cas présent le système utilise une machine SUN - Série 3/50 de la Société MICROSYSTEMS, de capacité mémoire de 4 Moctects, associée à un écran haute résolution supportant le multi-fenêtrage. Ce système est chargé d'un logiciel d'exploitation UNIX (marque de la Société ATT) accompagné d'un logiciel d'environnement graphique X-Windows (version X.11) de la Société O'REILLY AND ASSOCIATES, INC. (Newton, MA 02164, Etats-Unis d'Amérique).

D'une façon générale un mode graphique multi-fenêtres implique la définition d'une fenêtre comme une structure représentable à l'écran par un cadre rectangulaire, et munie d'une système de coordonnées locales (par exemple horizontal (x)/vertical (y) orthonormé) et éventuellement d'un contexte graphique (tel que la définition du fond, couleur et motif, la définition du cadre, un titre affichable, etc.). Dans l'environnement X-Windows, pour le système de gestion fenêtre utilisé dans le cas présent chaque fenêtre est surmontée d'une barre horizontale présentant un certain nombre de régions. Si on se réfère aux figures, la barre comporte une région centrale sombre portant le nom de la fenêtre et permettant, lorsque sélectionnée, le déplacement de la fenêtre sur l'écran et trois régions latérales, la région R1 permettant, lorsque sélectionnée, de passer la fenêtre sur le devant de l'écran, la région R2 permettant, lorsque sélectionnée, de fermer la fenêtre et de la réduire à l'état d'icone et la région R3 permettant, lorsque sélectionnée, de faire varier la taille de la fenêtre.

Le procédé de génération de formulaire selon l'invention peut être mis en oeuvre soit de façon totalement programmée soit de façon interactive par un ensemble logiciel particulier désigné ci-après logiciel interactif "F".

Pour profiter des avantages inhérents à la programmation objet particulièrement bien adaptée à la mise en oeuvre du procédé selon l'invention, cette dernière est implémentée par l'intermédiaire d'une interface de programmation LISP présentant une couche objet plus particulièrement l'interface Le-Lisp dans sa Version 15-2 (supportant les fonctions graphiques) développée par l'Institut National de Recherches en Informatique et en Automatisme (INRIA) (Rocquencourt, 78153 Le Chesnay, France).

Pour la mise en oeuvre de façon programmée du procédé selon l'invention, il a été décidé d'utiliser les fonctions LISP disponibles dans l'interface Le-Lisp Version 15-2. Cependant à ces fonctions de base ont été ajoutées un certain nombre de fonctions ou primitives originales elles-mêmes définies à partir de l'interface Le-Lisp Version 15-2 (grâce à la capacité d'ouverture de ce dernier) et regroupées sous le nom de jeu de fonctions "F". Cette façon de faire apporte un gain de temps et une souplesse d'utilisation notamment au niveau de caractère portable sur d'autres machines de l'interface ainsi complétée car les fonctions Le-Lisp 15-2 sont du type directement interprétées pour générer les instructions correspondantes au code assembleur (dans le cas présent celui de la machine virtuelle LLM3). Par la suite seules les fonctions "F" les plus représentatives de la mise en oeuvre du procédé selon l'invention seront présentées et définies en détail, étant entendu qu'un utilisateur familier du langage Le-Lisp pourra sans difficulté particulière recomposer la définition complète des autres fonctions "F" succintement présentées ou mêmes évoquées.

Il est à noter que l'utilisation des fonctions "F" n'est pas obligatoire pour la mise en oeuvre du procédé selon l'invention bien que fortement recommandée. En tout état de cause, les informations ici présentées sont suffisantes pour permettre à un utilisateur-programmeur familier du langage Le-Lisp de développer, sans aller au-delà de ses connaissances, les programmes LISP correspondants aux fonctions "F" ainsi que les programmes LISP, avec utilisation ou non des fonctions "F", permettant la génération des formulaires selon l'invention. De même ce programmeur aura le choix de développer des programmes correspondants à l'interface interactif "F" ou complémentaires à celui-ci soit en LISP soit en utilisant d'autres langages tel l'assembleur ou le langage C.

D'une façon pratique, outre l'interface Le-Lisp (Version 15-2) constituant le noyau du système, sont chargés un ensemble de programmes nommé système "F" et comportant en outre, le jeu des fonctions LISP "F" complémentaires aux primitives du noyau, le logiciel interactif "F" et divers fichiers utilisés soit pour l'exploitation du système (par exemple une interface-souris), soit par l'utilisateur dans le cadre d'applications spécifiques.

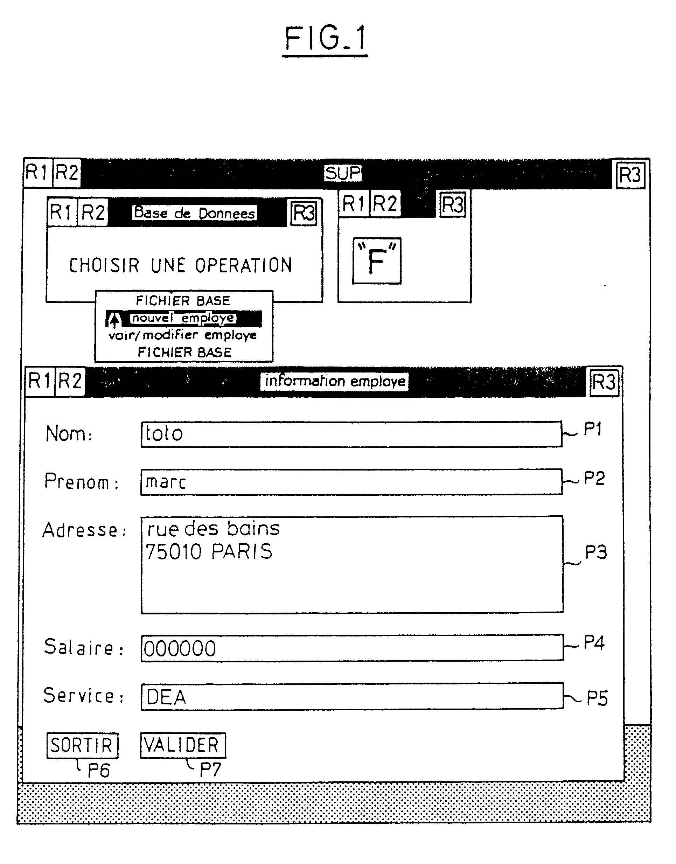

A l'écran l'interface LISP est matérialisée par une fenêtre d'Entrée/Sortie de nom "SUP" qui est associée à la boucle principale de l'interpréteur Le-Lisp (TOPLEVEL) (voir figure 1).

La souris a été choisie d'un type à trois boutons, le bouton de gauche étant affecté par convention aux sélections de zones ou d'objets graphiques à l'écran et aux appels d'éditeurs, le bouton de droite étant affecté à des opérations spécifiques telle la manipulation de certains menus et le bouton du milieu étant laissé libre pour l'utilisateur. Les évènements extérieurs provenant de la souris sont traités par l'interface souris pré-programmée susceptible en outre de reconnaitre l'appui (Down)/le relachement (Up) d'un bouton, la traîne (Drag) de la souris et des évènements logiques tels que l'entrée du pointeur souris dans la fenêtre. A l'écran la position du pointeur de la souris est repérée par une petite flèche dirigée vers le haut (voir figures). Bien entendu sans sortir du cadre de l'invention la souris pourrait être remplacée par tout autre dispositif de pointage tel un crayon optique ou une table graphique. Par ailleurs en complément de l'interface-souris on prévoit également une interface-clavier programmée autant pour les touches de caractères que celles de contrôle et celles de pointeur.

Avant de passer à la description détaillée d'une variante du procédé selon l'invention, il est fait remarquer que le lecteur pourra se reporter aux divers manuels d'utilisation des matériels présentés ci-dessus et aux divers manuels de référence des logiciels disponibles notamment ceux concernant UNIX, X-Windows (X-11) et le Le-Lisp (Version 15-2). En particulier il sera fait par la suite appel à diverses fonctions, symboles, expression présentées dans le manuel Le-Lisp (Version 15-2) en gardant toutefois la même codification et les mêmes principes d'écriture. Par exemple l'expression ci-dessous de la définition d'une fonction LISP :

(NOM <x> [<y>]) [SUBR à 1 ou 2 arguments]

s'interprète de la façon suivante :

- NOM est le nom de la fonction

- <x> et <y> sont les paramètres de la fonction (la présence des crochets [] signifiant que le paramètre <y> est optionnel)

- SUBR implique que les paramètres seront évalués comme arguments de la fonction (au sens LISP).

En préalable à la présentation exhaustive du procédé selon l'invention, de ses caractéristiques et de sa mise en oeuvre programmée ou interactive, il a été considéré opportun pour une bonne compréhension de l'invention, de présenter quelques exemples concrets de formulaires générés par le procédé selon l'invention.

Si on se réfère maintenant à la figure 1, par dessus la fenêtre SUP est affichée en haut à droite une petite fenêtre (sans nom) montrant l'icone "formulaire" ("F" dans un cadre carré) associée au logiciel interactif "F". Ce logiciel peut être appelé soit de façon programmée dans la fenêtre SUP soit par sélection dans un menu d'utilitaires associé à la fenêtre SUP.

La figure 1 montre également la visualisation de deux formulaires générés suivant le procédé selon l'invention. Ces deux formulaires sont totalement indépendants bien qu'utilisés dans le cas présent dans une même application utilisateur à savoir un système de gestion de base de données. Le premier formulaire matérialisé par la fenêtre intitulée "Base de Données" permet l'exécution d'un menu temporaire, le menu "FICHIER BASE", concernant des opérations sur le fichier de la base de données. Le second formulaire matérialisé par la fenêtre intitulée "information employé" constitue un masque de saisie/affichage pour un enregistrement particulier du fichier de la base de données.

Ainsi réalisé le premier formulaire (de nom "tableau" non visible à l'écran) comporte une seule page (la fenêtre d'écran "Base de Données"), page qui dans ce cas particulier constitue en elle-même la zone active. Cette page comporte un squelette constitué par de l'information inerte, la chaine (ou "string") "CHOISIR UNE OPERATION". A cette page est associé le menu temporaire (visualisé par un cadre disposé à cheval sur la base inférieure de la fenêtre) "FICHIER BASE" proposant le choix entre l'opération "nouvel employé" (ici sélectionnée) pour ajouter un nouvel enregistrement au fichier et l'opération "voir/modifier employé" pour visualiser un enregistrement existant et modifier éventuellement son contenu. Le menu temporaire associé à la page par l'éditeur "Menu temporaire" (PM) est déclenché par l'appui du bouton de gauche de la souris dans la page pour disparaitre à la sortie de l'éditeur, c'est à dire au relachement du bouton de gauche. La sélection d'une opération se fera par déclic du bouton de gauche sur l'une des deux chaines "nouvel employé" et "voir/modifier employé". Par l'intermédiaire d'un lien entre le formulaire "Base de Données" et l'application utilisateur elle-même, la sélection dans le menu déclenche l'exécution de l'opération choisie dans l'application utilisateur.

Le second formulaire (de nom "employé" non visible à l'écran) comporte également un seule page (la fenêtre d'écran "information employé") présentant sept zones actives ou parties toutes matérialisées par des cadres rectangulaires. Les cinq premières zones (P1-P5) sont susceptibles de recevoir de l'information variable, par suite de remplissage (à partir du clavier ou du système) les deux dernières (P6-P7) présentent chacune un squelette constitué par la chaine "SORTIR" ou la chaine "VALIDER". Ces deux zones (P6-P7) associées à l'éditeur "déclic" (CL), sont activées par appui du bouton de gauche dans la zone (qui entraine l'inversion vidéo), le relachement du bouton déclenchant la validation de l'activation et par l'intermédiaire d'un autre lien (dit de post-validation) avec l'application-utilisateur, l'exécution d'opérations prédéfinies. L'activation des cinq premières zones (P1-P5) se fait par entrée dans un éditeur (déclic du bouton de gauche de la souris dans la zone considérée) déclenchant l'autorisation de remplissage de la zone ; dans le cas présent par du texte sur une ligne ou par du texte dans un écran cadré à gauche pour la zone P3. Pour terminer la description de l'unique page "information employé" du formulaire, celle-ci comporte un squelette constitué des noms (présentés en colonne) des articles correspondants aux cinq premières zones (P1-P5).

Avant d'étudier plus en détail la structure des formulaires générés par le procédé selon l'invention il est important de noter les deux remarques générales suivantes :

- selon l'invention un formulaire existe matériellement pour autant qu'il est visualisable (c'est à dire chargé dans la mémoire centrale du système). Il peut bien sûr être physiquement visualisé à l'écran, mais cette condition n'est pas nécessaire pour l'existence et la définition du formulaire. Cette caractéristique originale sera largement utilisée par un autre type de lien avec l'application-utilisateur, sous la forme d'une fonction d'action de pré-affichage (l'appel de la visualisation du formulaire déclenchant dans l'application-utilisateur l'exécution d'opérations diverses pré-définies).

- Il faut bien distinguer les opérations de génération d'un formulaire appelé mode construction des opérations de remplissage de celui-ci ; le mode remplissage implique la possibilité pour une zone active d'entrer sous le contrôle d'un éditeur. En ce qui concerne les opérations de génération de formulaires (mode construction), elles regroupent d'une part la création de toutes pièces, d'autre part la modification d'un formulaire déjà créé. Ainsi donc le procédé selon l'invention permet une définition de la structure des formulaires selon les points suivants :

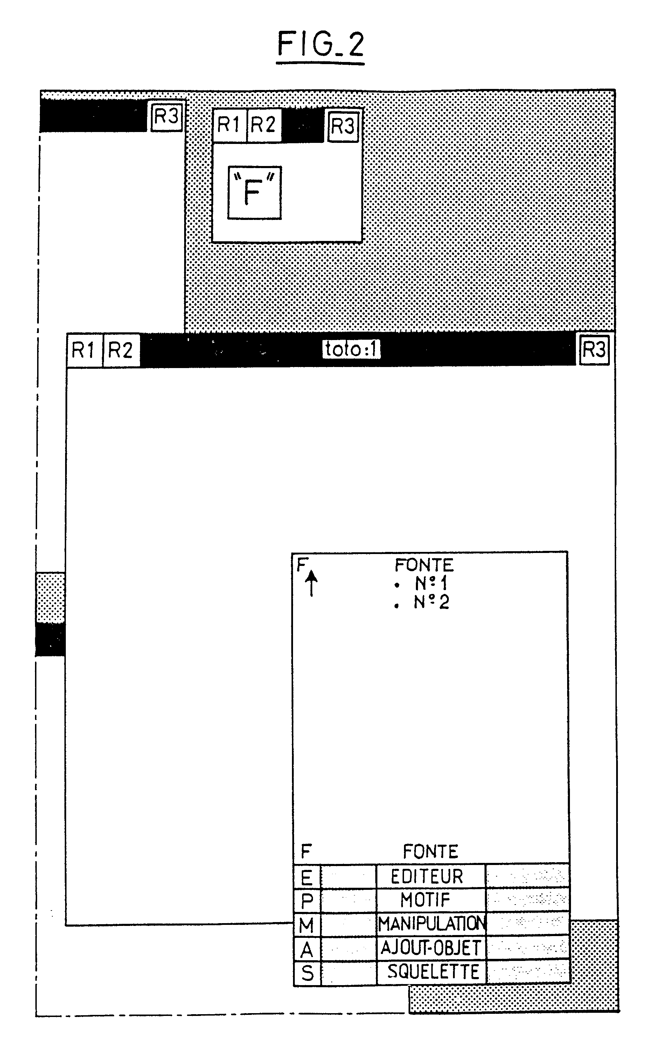

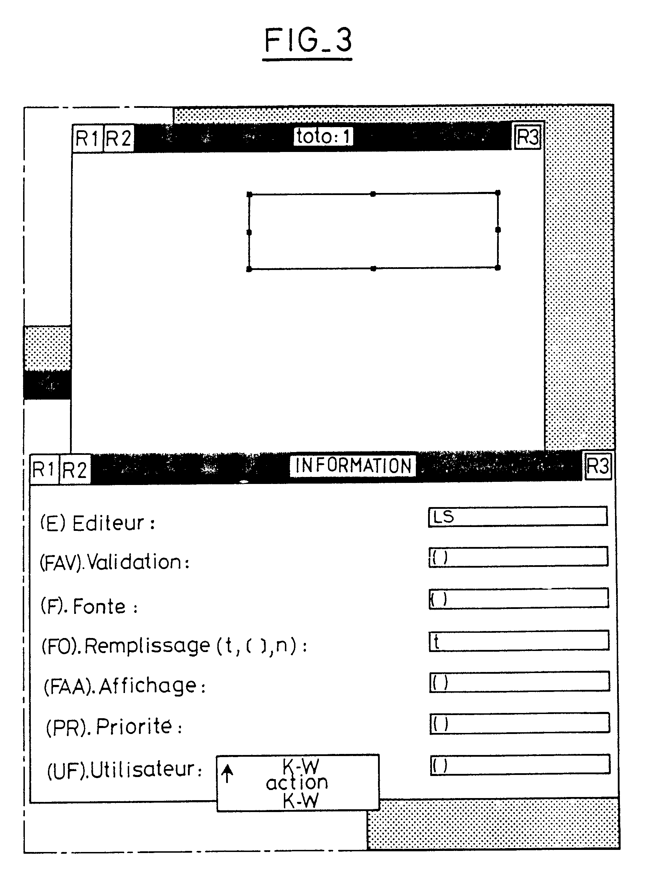

1 - Un formulaire obtenu par le procédé selon l'invention est constitué par un ensemble de pages, matérialisables par des fenêtres d'écran sur le serveur graphique, chaque fenêtre d'écran étant, à sa création, positionnée par rapport à un système de coordonnées de référence lié au serveur graphique (dans le cas présent le système de coordonnées associé à la fenêtre racine définie par l'environnement X.11 et représentée par le fond pointillé sur les figures). En cas de multiplicité de pages, celles-ci sont liées entre elles par référence au nom du formulaire, mais portent chacune un titre distinct (par défaut le titre est le nom du formulaire suivi du numéro de création de la page, par exemple "toto:1" aux figures 2 et 3).

2 - Une zone active, c'est à dire associée à un éditeur pour réagir à un évènement extérieur lorsque l'éditeur lui-même est activé (par exemple lors du remplissage de la zone), peut être soit la page elle-même soit une partie de celle-ci (matérialisée dans l'exemple ici décrit par une zone rectangulaire). Cette zone est en fait une extension d'un objet graphique prédéfini, ici un rectangle graphique défini en particulier par les coordonnées de son coin supérieur gauche, sa largeur et sa hauteur. Cette extension se fait par association d'information variable, qui peut être inerte ou active sous le contrôle d'un éditeur. Dans tous les cas un formulaire comporte au moins une zone active.

3 - Une page contient ou non des objets squelette, des parties, une identification d'éditeur (son nom), une fonction d'action de post-validation (associée, quand elle existe, à une application-utilisateur par une fonction de lien), une fonction d'action de pré-affichage (associée, quand elle existe, à une application-utilisateur par une fonction de lien), de l'information active et de l'information variable après remplissage. L'information active peut être quelconque grâce à la méthode d'affichage des éditeurs. Les objets squelette sont soit des structures graphiques prédéfinies (manipulables en bloc sur l'écran) soit des icones (mémoires de points). L'activation de la page est obtenue par association avec un éditeur suivi d'un "remplissage" ou de l'activation de la structure graphique. De façon récursive une partie peut contenir les mêmes types d'éléments qu'une page, notamment des sous-parties constituées (récursivement) de sous-zones actives.

Le procédé selon l'invention utilise la caractéristique capitale que représente l'éditeur de zone active. Pour répondre à la grande variété d'application des formulaires générés selon l'invention, une variante du procédé selon l'invention incorpore l'opération de définir et de préétablir un certain nombre d'éditeurs types parmi lesquels un seul sera sélectionné lors de l'association avec la zone active.

D'une façon générale l'éditeur gère l'information remplie dans la zone active et détermine la réaction de celle-ci aux évènements extérieurs notamment ceux provenant du clavier et de la souris (par exemple visualisation du contenu, affichage ordonné ou non, dessin d'une ligne ou d'un graphique). L'éditeur gère également sa sortie, c'est à dire l'interruption de la prise en compte des évènements extérieurs et éventuellement la validation de l'information remplie.

Les éditeurs concernent aussi bien les pages que les parties. Ils sont appelés ou déclenchés en appuyant sur le bouton de gauche de la souris dans la page ou la partie concernée. On peut les quitter, pour certains automatiquement au relachement du bouton. Pour d'autres par déclic hors de la page ou la partie concernée. Cette sortie doit être différenciée de la fonction de validation du remplissage qui n'existe que dans certains cas. Enfin certains éditeurs offrent des fonctionnalités accessibles avec le bouton de droite grâce à l'affichage d'un menu temporaire.

Les éditeurs disponibles dans l'exemple ici décrit sont les suivants :

.Ligne (LN) :
. Editeur de texte bloquant dans les les limites de la partie (le blocage interdisant l'insertion d'un caractère une fois la limite droite de la partie atteinte).
. Le déclenchement est matérialisé par l'apparition du curseur d'écriture.
. La validation du remplissage est efectuée par un retour-chariot ou éventuellement par déclic hors de la partie.

.Ligne avec défilement (LS) :
. Editeur de texte permettant le défilement.
. Le bouton de gauche de la souris permet de positionner le point d'insertion.
. Le bouton de droite permet de déplacer horizontalement le texte rempli.
. La validation du remplissage est identique à celle de l'éditeur ligne (LN).
. C'est l'éditeur associé par défaut à une partie.

.Ecran normal (SN) :
. Editeur de texte écran cadré à gauche de la partie.
. Son remplissage est bloquant dans les limites de la partie.
. Le déclenchement est matérialisé par l'apparition du curseur d'écriture.
. La sortie est obtenue par déclic hors de la partie.
. La validation du remplissage s'effectue par le bouton de droite.

.Ecran avec défilement (TS) :
. Editeur identique à l'éditeur écran normal (SN) avec l'exception suivante :
. Le nombre de lignes n'est pas limité par la hauteur de la partie, permettant ainsi l'insertion de lignes sous les limites de la partie.

.Ecran centré (SC) :
. Editeur identique à l'éditeur écran normal (SN) avec l'exception suivante :
. Le texte est centré dans la partie.

.Graphique (GR) :
. Editeur d'objets graphiques
. Son déclenchement permet de sélectionner un objet et de le déplacer si on ne relâche pas le bouton de gauche de la souris.
. Un déclic sur le bouton de droite fait apparaître un menu offrant la validation du remplissage et des opérations sur les objets réalisables grâce au bouton de gauche. Parmi ces opérations on trouve des opérations de dessin ou de décoration (par exemple : coloration du fond). Sur la figure 3 l'affichage de huit repères constitués de carrés noirs sur le cadre du rectangle délimitant une partie indique la sélection et permet de modifier les dimensions de l'objet.

.Menu (MN) :
. L'éditeur transforme une partie en zone de menu contenant le nom d'une liste de choix et les articles de la liste (sous forme d'objets graphiques notamment des chaines de caractères).
. L'objet sélectionné est inversé tant que le bouton de gauche est appuyé (voir à la figure 1, le menu FICHIER BASE).
. Le relâchement du bouton de gauche effectue la sortie de l'éditeur et la validation du "remplissage" (la sélection de l'objet).

.Croix (CR) :
. L'éditeur affiche (ou efface) une croix au déclenchement.
. La validation de l'activation par relachement du bouton est optionnelle.

.Sélection-brillance (SE) :
. L'éditeur fonce (ou éclaircit) la partie au déclenchement.
. La validation de l'activation par relachement du bouton est optionnelle.

.Déclic (CL) :
. L'éditeur inverse toute la page ou partie associée tant que le bouton de gauche reste enfoncé.
. La validation de l'activation est obtenue par le relachement du bouton.

.Menu temporaire (PM) :
. L'entrée dans cet éditeur par le bouton de gauche déclenche l'affichage d'un menu temporaire construit à partir d'informations stockées dans un champ appelé champ utilisateur (UF). Dans le mode de réalisation de l'invention ici décrit, l'information est une liste LISP constituée soit d'une chaine-titre placée en tête des chaînes d'articles, soit d'une fonction Le-Lisp particulière du nom de CREATE-MENU précédant les autres informations et permettant de ne créer le menu effectivement qu'une fois.

.Défilement vertical (SV) / Défilement horizontal (SH) :
. Editeur permettant le défilement vertical/horizontal du contenu d'une partie réservoir associée à la partie considérée comportant une barre de défilement grâce à une fonction de liaison de zone ou à une fonction de définition d'un couple barre de défilement-partie réservoir.
. La position correcte du curseur de la barre de défilement est donnée soit en réaffichage de la barre soit après sélection de cette même barre.

.Editeur -Utilisateur (EU) :
. En plus des éditeurs pré-définis présentés ci-dessus le procédé selon l'invention autorise la création par l'utilisateur d' éditeurs particuliers susceptibles de lire des évènements souris et de les traiter selon des opérations bien spécifiques.
En mode programmé LISP ceci implique la création de fonctions particulières, par exemple :
(de # :editutil:select (<part> <x> <y> <same>) <S1>...<SN>)
Dans ce cas cette fonction est appelée lorsque la partie <part> à laquelle l'éditeur "editutil" est associé, est sélectionnée avec le bouton de gauche de la souris (évènement Down ou Drag) ; <x> et <y> sont les coordonnées de la souris par rapport à la fenêtre ; <same> vaut "nil" (non ou ()) si la partie n'est pas déjà sélectionnée, "t" (oui ou un symbole différent de ()) dans le cas contraire c'est à dire dans l'hypothèse d'une traîne (Drag) à l'intérieur de la partie.
Le procédé selon l'invention autorise pour certains éditeurs (ligne (LN), ligne avec défilement (LS), croix (CR), sélection-brillance (SE)) le remplissage ordonné des parties selon leur rang ou numéros d'ordre en mode programmé on définit la fonction d'ordre de remplissage de la façon suivante :
(ORDER-PARTS <part1>-----<partN>) [SUBR à arguments]
En cas de répétition d'une partie en fin de liste, il y aura bouclage infini du remplissage avec destruction de l'information remplie à la fin de chaque cycle.
Au cours de la présentation des deux formulaires illustrés à la figure 1, il a été fait référence à certains liens avec l'application-utilisateur. Leur incorporation dans une variante du procédé selon l'invention est très avantageuse. Ces fonctions de lien originales sont d'un intérêt majeur car tout en garantissant l'autonomie du formulaire par rapport à l'application-utilisateur, elles permettent l'utilisation pratique de celui-ci, de surcroit avec une mise en oeuvre simple et souple.
* La première fonction de lien associe à la partie une fonction d'action post-validation (FAV) déclenchée par validation du remplissage. Elle est utilisable lors de l'entrée d'information de l'écran vers le système par exemple en saisie de donnée ou en saisie d'une sélection faite par l'utilisateur au cours d'un dialogue.
En mode programmé elle se présente sous la forme :
(FORMPART-COMPUTE <part> [<fn> <arg1> ---<argN>]) [SUBR à 1,2 ou N arguments]

La fonction <fn> désigne la fonction d'action de post-validation (FAV), qui est appelée avec 2 arguments obligatoires la page et la partie et ses arguments optionnels.

Si <fn> n'est pas fourni, la fonction de lien (FORMPART-COMPUTE) affiche la fonction de remplissage associée à la partie.

A titre d'exemple, cette fonction de lien permet de sortir d'un remplissage bloquant. La fonction d'action de post-validation sera alors définie de la façon suivante:

(de fn (page part) (exit endformfilling <s1>---<sN>))

* La seconde fonction de lien offre la communication vers l'application-utilisateur lors de sortie d'information du système vers l'écran, et représente en fait l'inverse de la première. Elle appelle une fonction d'action de pré-affichage (FAA) préalablement à l'exécution de l'opération d'affichage. Cette fonction d'action permet la manipulation d'information remplie, et ainsi le simple appel de la fonction de réaffichage de page ou de partie, de façon explicite programmée ou de façon implicite par la venue d'un évènement souris dans la fenêtre de dialogue, permet la mise à jour d'un formulaire.

En mode programmé, elle se présente sous la forme:

(FORMPART-DISPLAYFN <part> [<fn> <arg1>---<argN>]) [SUBR à 1,2 ou N arguments]

La fonction <fn> désigne la fontion d'action de pré-affichage (FAA) qui est appelée avec 2 arguments obligatoires la page et la partie et ses arguments optionnels.

Par défaut la fonction <fn> est appelée s'il n'y a pas d'information remplie dans la partie du formulaire. Par exemple, ceci permet avant l'affichage d'aller chercher dans une base de données présente dans le système de l'information pré-existante.

Cette seconde fonction de lien est souvent associée à une fonction de priorité vis à vis du contenu de la partie entre l'utilisateur (dialogue interactif) et l'application-utilisateur (le système informatique en l'état avant l'instruction d'affichage). Cette fonction de priorité offre la faculté (option oui ou t) d'appeler la fonction d'action de pré-affichage avant tout affichage d'information remplie dans la partie (l'application est alors prioritaire) ; à défaut (option non ou nil) l'utilisateur sera prioritaire et la fonction d'action de pré-affichage ne sera appelée qu'en l'absence d'information remplie.

En mode programmé la fonction se définit de la façon suivante :

(FORMPART-APPLI/USER-PRIORITY <part> [<y/n>]) [SUBR à 1 ou 2 arguments]

Pour terminer la présentation du procédé selon l'invention et de diverses variantes dans leur mise en oeuvre en mode programmé, d'autres fonctions "F" non encore présentées mais fréquemment utilisées sont passées rapidement en revue ci-après :

A - Fonctions concernant le formulaire :

. (CREATE-FORM <name>) [SUBR à 1 argument]
Crée un formulaire de nom <name> constitué d'une chaîne de caractères.

. (STORE-FORM <form>[<file> <mode>]) [SUBR à 1,2 ou 3 arguments]
Sauve le formulaire dans un fichier de nom complet <file> ou à défaut (sous le nom <form>) dans un fichier existant dans le directoire courant du système d'exploitation UNIX.
Le mode (1,2 ou 3) précise le type de sauvegarde choisi :
- mode 1 : le formulaire sera sauvegardé en l'état par exemple en cours de création/construction.
- mode 2 : le formulaire sera sauvegardé prêt à être rempli (les éditeurs des parties étant mis en alerte sont prêts à un appel), toutefois le retour au mode construction (pour une modification du formulaire) est autorisé.
- mode 3 : le formulaire sera sauvegardé prêt à être rempli sans autorisation de retour au mode construction.
Au retour l'instruction inverse se subdivise en une option chargement sans affichage des pages et une option chargement avec affichage des pages.

B - Fonctions concernant les pages :

. (ADD-PAGE-TO-FORM <form> <x> <y> <w> <h> [<title>]) [SUBR à 5 ou 6 arguments]
Ajoute une nouvelle page au formulaire <form>. La fenêtre correspondante est créée et affichée à la position (<x> <y>) dans l'écran avec pour largeur <w> et hauteur <h>. Si le titre <title> est fourni il devient le titre de la fenêtre, sinon celui-ci sera le nom en formulaire suivi du numéro de création de la page.

. (SHOW-PAGE <page>) [SUBR à 1 argument]
Affiche le contenu de la page <page>. Cette fonction est utilisée pour la mise en oeuvre de la fonction d'action de pré-affichage.

. (REDISPLAY-FORMPAGE <page>) [SUBR à 1 argument]
Efface et réaffiche la page <page>. Cette fonction est utilisée pour la mise en oeuvre de la fonction d'action de pré-affichage.

. (FILL-PAGE <page> [<tilexit>]) [SUBR à 1 ou 2 arguments]

Déclenche le mode remplissage de la page (mise en alerte des éditeurs des parties). La fourniture de l'expression <tilexit> déclenche un remplissage bloquant sur la page (c'est à dire l'impossibilité d'activer une autre fenêtre ou d'exécuter une commande avant la validation du remplissage de la zone considérée).

C - Fonctions et méthodes concernant les parties :

Elles s'appliquent pour la plupart également aux pages et aux sous-parties grâce à la possibilité de récursivité offerte par l'interface Le-Lisp.

. (SENDQ DISPLAY <part>)

Cette méthode permet d'afficher, en plus du rectangle, le contenu de la partie (ses sous-parties, ou squelette et l'information remplie)

. (REDISPLAY-FORMPART <part>) [SUBR à 1 argument]

Efface et réaffiche la partie <part> (à condition que la page correspondante soit courante). Cette fonction est également utilisée pour la mise en oeuvre de la fonction d'action de pré-affichage.

. (ADD-PART-TO-PART <part> <x> <y> <w> <h>) [SUBR à 5 arguments]

Ajoute une nouvelle sous-partie (partie) dans la partie (page) <part>.

La nouvelle sous-partie (partie) est créée à la position (<x> <y>) par rapport à sa fenêtre-page. Son contour n'est pas affiché.

L'éditeur associé par défaut est ligne avec défilement (LS).

. (FORMPART-USER <part> [<value>]) [SUBR à 1 ou 2 arguments]

Permet de lire la valeur du champ réservé à l'utilisateur pour la page ou la partie <part> ou de lui affecter la valeur <value>

. ORDER-PARTS (pour mémoire)

D - Fonctions concernant les éditeurs :

. (FORMPART-EDITOR <part> [<editor>]) [SUBR à 1 ou 2 arguments]

Associe l'éditeur <editor> à la page ou la partie <part> . A défaut affiche l'éditeur associé.

. (FORMPART-VALUE <part> [<value>]) [SUBR à 1 ou 2 arguments]

Si la valeur <value> n'est pas fournie, cette fonction affiche l'ensemble des informations utilisées dans la page ou la partie <part> par l'éditeur associé.

. (FORMPART-FILLED-INFO <part>) [SUBR à 1 argument]

Cette fonction affiche l'information sauvée suite au remplissage sous l'éditeur associé à la page ou partie <part>.

. (FORMPART-FONT <part> [<font>]) [SUBR à 1 ou 2 arguments]

Associe à la page ou partie <part> la police de caractères (ou fonte) de numéro ou de trous <font> . Si le numéro <font> n'est pas fourni, cette fonction affiche le numéro de la police associée.

Par défaut une police de numéro nil ou () est associée aux pages et parties.

. (FORMPART-FILLING-VALIDATE <part> [<y/n>]) [SUBR à 1 ou 2 arguments]

Pour les éditeurs "croix" (CR) et "sélection-brillance" (SE), autorise ou non le déclenchement automatique de la fonction d'action de post-validation associée à la page ou partie <part> selon que <y/n> vaut t (oui) ou nil.

E - Fonctions concernant les objets graphiques :

Ce sont essentiellement des fonctions d'ajout (ADD) ou de retrait (DELETE) concernant les divers types d'objets graphiques tels que "chaîne de caractères", "rectangle", "icone", etc...

. (ADD-STRING-TO-PART <part> <x> <y> <string> [<font> <editor>) [SUBR à 4, 5 ou 6 arguments]

Cette fonction associe sans l'afficher la chaîne <string> à la page ou à la partie à la position <x> <y> par rapport à la fenêtre-page et dans la police de numéro <font>.

L'éditeur <editor> gère la chaine <string> . Par défaut cet éditeur est celui associé à la partie. Si la chaîne doit faire partie du squelette de la partie, l'argument <editor> aura pour valeur "squelette", ce qui permet pour chaque partie (page) de définir un ensemble d'objets graphiques (manipulable comme tel) appelé le squelette de la partie (page) et insensible à l'éditeur associé à la partie. D'autres éditeurs sont disponibles

9

dans cette fonction pour gérer la chaîne <string> par exemple les éditeurs "ligne" (LN), "menu" (MN), "déclic" (CL) ou "graphique" (GR).

**F - Fonctions concernant le logiciel interactif "F" :**
Ces fonctions ont été établies pour faciliter l'implémentation de l'interface interactive "F".

. (INTERACTIVE-FORM-HANDLING) [SUBR à 0 argument]
Cette fonction crée et affiche la fenêtre contenant l'icone "formulaire" ("F" dans un cadre carré) montrée à la figure 1).
La sélection de l'icone "formulaire" avec le bouton de droite ou de gauche provoque l'affichage d'un menu d'entrée "ENTREE" dans le mode interactif, menu d'entrée qui sera présenté ultérieurement.

. (ALLOWFORBID-PAGE-BUILDING <page> <y/n>) [SUBR à 2 arguments]

Cette fonction autorise ou interdit la construction interactive du squelette de la page <page> selon que <y/n> vaut t ou nil. Dans le premier cas un menu "CREATION" peut être associé à la page zone correspondante.
Par défaut la construction interactive est interdite pour les formulaires créés programmatiquement.

. (BUILD-FORMPAGE-SQUELETTON <page>) [SUBR à 1 argument]
Met la page <page> en mode construction interactive sous le controle d'un menu "CREATION" présentant lui-même un certain nombre de sous-menus.

. (EXIT-FORMPAGE-BUILDING <page>) [SUBR à 1 argument]
Remet la page <page> sous le mode remplissage.

. (BUILDFORMMENU-ADD <type> <name>) [SUBR à 2 arguments]
Permet d'ajouter un nouveau choix <name> dans le sous-menu intitulé <type> du menu "CREATION" utilisé en mode construction de façon interactive. Par exemple, pour le sous-menu EDITEUR, l'utilisateur pourra ajouter le nom d'un éditeur spécifique après sa création.
Il est à noter que la programmation LISP implique également la création (au sens LISP) d'une structure de formulaire de type arborescente avec son ensemble de descripteurs au niveau de chaque noeud de l'arbre. Ces descripteurs seront différents selon qu'il s'agit de la racine représentant tout le formulaire, d'un noeud intermédiaire décrivant une partie ou d'une fenêtre pour un champs particulier. Cette structure arborescente qui ne sera pas décrite ici en détail, admet un certain nombre de variantes au choix de l'utilisateur-programmeur dans le respect des règles de construction de formulaire selon les spécifications données dans la présente description. A cette structure spécifique correspond une interface pré-programmée spécifique de manipulation de la structure de formulaire (lecture/sauvegarde). Cette interface est incorporé dans l'ensemble logiciel "F" chargé dans la mémoire centrale. Ici encore la création de la structure de formulaire et de l'interface programmée reste dans le champ des compétences courantes d'un utilisateur-programmeur familier du langage Le-Lisp.
Sur la base de ce qui précède et toujours à titre d'exemple, il est donné ci-dessous l'écriture d'un programme spécifique (la fonction LISP "menu-application") avec utilisation des primitives Le-Lisp et des fonctions "F", ce programme permettant la génération (ici la création) du premier formulaire de la figure 1 du nom de "tableau" ; la codification utilisée est celle adoptée dans la programmation Le-Lisp 15-2 où en particulier le nom des fonctions apparaissent en écriture minuscule :

```
1.1 (de menu-application ()
1.2  (let* ((form (create-form "tableau"))
1.3        (page (add-page-to-form form 20 30 230 60 "Base
de Données")))
1.4        (formpart-editor page 'popmenu)
1.5        (formpart-user page
1.6 '(create-menu "FICHIER BASE" "nouvel employe"
"voir/modifier employe"))
1.7        (formpart-compute page 'operation)
1.8        (add-string-to-part page 20 24 "CHOISIR UNE
OPERATION" () 'squeletton)
1.9        (show-page page)))
```

La lecture de ce programme appelle les quelques commentaires suivants :

- l'utilisation de l'instruction "let" à la ligne 1.2 permet de créer des variables temporaires (locales) telles "tableau" et "Base de Données" associées à des structures précédemment définies.

- les valeurs numériques 20, 30, 230 et 60 donnent la position du point gauche de la fenêtre "Base de Données" (x = 20, y = 30), sa largeur (230) et sa hauteur (60).

- l'expression à la ligne 1.4 associe l'éditeur "menu-temporaire" = (PM) = 'popmenu.

- l'expression à la ligne 1.6 est le contenu du champ utilisateur défini à la ligne 1.5. Ce contenu est utilisé par l'éditeur (PM).

- l'expression à la ligne 1.7 représente la fonction de lien particulière avec comme fonction d'action de post-validation une fonction de nom "opération".

- l'expression à la ligne 1.8 ajoute une chaîne de caractères au squelette (pseudo-éditeur squelette = 'squeletton).

- l'expression à la ligne 1.9 commande l'affichage du formulaire à l'écran.

Il résulte de ce qui précède que la liaison avec l'application-utilisateur est très simple et souple au travers de l'appel à la fonction "opération". A titre d'exemple, celle-ci peut être définie comme il suit :

```
2.1 (de operation (page part choix)
2.2  (selectq choix
2.3    ("nouvel employe" (show-page (formulaire-employe 20
120)))
2.4    ("voir/modifier employe" (lister-employes 20 120))))
```

- l'expression à la ligne 2.1 montre que la fonction "opération" avec ses deux premiers arguments "page" "part" est bien du type fonction d'action associée à l'application utilisateur par une fonction de lien. Cette fonction sera appelée dès la validation de l'opération de sélection dans le menu temporaire "FICHIER BASE", d'un des deux articles "nouvel employé" et "voir/modifier employé".

- l'expression aux lignes 2.2 et 2.3 implique le déclenchement de la fonction "show-page" en cas de choix de l'article "nouvel employé". L'exécution de cette fonction déclenchera l'affichage en (x = 20 et y = 120) dans l'écran du résultat de l'exécution d'une autre fonction LISP appelée "formulaire-employé" et permettant la génération du second formulaire de la figure 1 de nom "employé".

La fonction "formulaire-employé" est définie de la façon suivante :

```
3.1 (de formulaire-employe (x y)
3.2   (let* ((form (create-form "employe"))
3.3           (page (add-page-to-form form x y 500 320
"information employe"))
3.4           (part1 (add-part-to-part page 100 20 350 20))
3.5           (part2 (add-part-to-part page 100 60 350 20))
3.6           (part3 (add-part-to-part page 100 100 350 80))
3.7           (part4 (add-part-to-part page 100 200 350 20))
3.8           (part5 (add-part-to-part page 100 240 350 20))
3.9           (part6 (add-part-to-part page 20 280 60 20))
3.10          (part7 (add-part-to-part page 100 280 70 20)))
3.11             (add-string-to-part page 20 64 "Nom:" ()
'squeletton)
3.12             (add-string-to-part page 20 64 "Prenom:"
() 'squeletton)
3.13             (add-string-to-part page 20 104 "Adresse:"
() 'squeletton)
3.14             (add-string-to-part page 20 204 "Salaire:"
() 'squeletton)
3.15             (add-string-to-part page 20 244 "Service:"
() 'squeletton)
3.16             (add-string-to-part part6 23 284 "SORTIR"
() 'squeletton)
3.17          (add-string-to-part part7 103 284 "VALIDER"
() 'squeletton)
3.18             (formpart-editor part3 'screen-normal)
3.19             (formpart-editor part6 'click)
3.20             (formpart-compute part6 'tuer-fenetre)
3.21             (formpart-editor part7 'click)
3.22             (formpart-compute part7 'valider)
```

```
3.23          (formpart-user part1 'nom)
3.24          (formpart-user part2 'prenom)
3.25          (formpart-user part3 'adresse)
3.26          (formpart-user part4 'salaire)
3.27          (formpart-user part5 'service)
3.28          (formpart-displayfn part2 'verifier part1
'prenom)
3.29          (formpart-displayfn part3 'verifier part1
'adresse
3.30          (formpart-displayfn part4 'verifier part1
'salaire
3.31          (formpart-displayfn part5 'verifier part1
'service
3.32          page))
```

La lecture de ce programme appelle les commentaires suivants :
- après la création de la page "information employé", les expressions contenues dans les lignes 3.4 à 3.10 définissent les sept parties de la page (de P1 à P7 sur la figure 1). Elles sont suivies par cinq lignes de squelette de page (par exemple la chaîne "nom" en regard de la partie "part1" (P1)), puis deux lignes de squelette de partie (par exemple la ligne 3.16 associant le mot "SORTIR" à la partie "part6" (P6)).
- Les lignes 3.18 et 3.19 concernent les éditeurs associés aux parties "part3" (écran-normal-(SN) = 'screen-normal) et "part6" (déclic = (CL) = 'click). Par défaut l'éditeur "ligne avec défilement" (LS) est l'éditeur d'une partie.
- La ligne 3.20 concerne l'appel de la fonction d'action de post-validation "tuer-fenêtre" qui est définie comme il suit :
(de tuer-fenêtre (page part) (kill-window page))
Cette fonction a pour effet d'effacer la page à l'écran après un déclic dans la partie "part6" (P6).
- La ligne 3.23 associe dans le champ utilisateur de la partie "part1" un contenu ayant la valeur "nom".
- La ligne 3.29 permet l'exécution de la fonction d'action "vérifier" avant l'affichage du formulaire (appel de la fonction "show-page" dans une application utilisateur).
Dans le cas présent cette fonction "vérifier" est appelée par défaut dans le cas où le contenu de la partie (par exemple : "part3") est vide avant l'affichage lui-même appelé par la souris. La fonction "vérifier" permet alors de rechercher si le contenu de la partie "part1" est vide ou occupé par un nom "X". Dans ce dernier cas la fonction "vérifier" ira chercher dans un fichier de base de données le contenu du champ "adresse" de l'enregistrement correspondant au nom "X" et procédera au remplissage de la partie "part3" (P3).
La fonction de la ligne 3.29 est utilisée par exemple pour l'affichage du contenu d'un enregistrement d'une base de données. Si le nom "X" est obtenu par sélection d'un choix dans une liste, il suffit pour permettre le remplissage du formulaire à partir du système, de charger la valeur "X" du choix (par l'intermédiaire de la fonction "car") dans le premier élément "part1" de la liste des parties de la page obtenue par la fonction "formpart-parts" <page>. Ce chargement est obtenu par la fonction "F" "formpart-line-value" similaire à la fonction "formpart-value". L'écriture programmée de cette dernière opération dans l'application-utilisateur prend alors la forme suivante :

```
(de fn
 (let* ( ... )
  (when choix
        (let  ((page  (formulaire-employe  20  120)))
     (formpart-line-value  (car  (formpart-parts  page))
choix)
    (show-page page)))))
```

L'exemple qui précède revèle parfaitement l'autonomie par rapport aux programmes d'application des formulaires générés par le procédé selon l'invention. De plus, il montre l'intérêt des fonctions "F" constituées qui sont susceptibles d'être utilisés autant dans les programmes de génération du formulaire que dans les programmes d'application.

Pour terminer la présentation du mode programmé de la mise en oeuvre du procédé selon l'invention, il faut signaler la faculté de développer des fonctions "F" préétablies permettant la création automatique d'un formulaire simple par exemple un formulaire d'une page comprenant une colonne de chaînes (squelette), chaque chaîne étant associée à une partie à remplir (sous l'éditeur ligne) en regard sur la même ligne.

Au cours des développements précédents, il a été fait plusieurs fois mention du mode interactif de mise en oeuvre du procédé selon l'invention. Ce mode interactif va faire maintenant l'objet d'une présentation complète. Sauf indication contraire, les opérations de sélection mentionnées ci-après sont réalisées par l'intermédiaire de la souris.

Après appel de l'icone "formulaire" "F" et son affichage dans l'écran, suivi de la sélection de cette icone, un menu d'entrée "ENTREE" est alors affiché avec les choix suivants :

MENU "ENTREE"

1 - CREATION
2 - CHARGEMENT
3 - CONSTRUCTION
4 - SORTIE DE L'INTERFACE "F".

La sélection d'un choix fait disparaître le menu "ENTREE", son réaffichage étant obtenu par une nouvelle sélection de l'icone "F".

Le choix CREATION dans le menu "ENTREE" initialise la création de toutes pièces d'un formulaire de la façon suivante :

L'opération commence par l'affichage d'une fenêtre de dialogue "CREATION D'UN NOUVEAU FORMULAIRE" comportant une zone de remplissage pour permettre à l'utilisateur d'entrer le nom choisi pour le formulaire. Après la validation de l'entrée du nom par retour chariot, la fenêtre de dialogue disparaît pour laisser la place à une nouvelle fenêtre vide dont le titre porte le nom donné au formulaire et qui constitue en fait la première page du nouveau formulaire. Un menu "CREATION" est associé et le formulaire est placé sous le contrôle de ce menu. Ceci implique que le formulaire se trouve en mode création (par opposition au mode remplissage du formulaire) avec inhibition des éditeurs.

A ce stade l'écran du système se présente sensiblement sous l'aspect illustré à la figure 2. Le menu "CREATION" est du type "paquet de cartes" avec six sous-menus appelés respectivement par déclic du bouton de droite de la souris dans la barre correspondante. Ces sous-menus qui sont maintenant passés en revue, ont pour titre :

MENU "CREATION"

F - FONTE
E - EDITEUR
P - MOTIF
M - MANIPULATION
A - AJOUT-OBJET
S - SQUELETTE

- Le sous-menu FONTE (F) qui est visible sur la figure se compose du simple choix [N° 1] : police à caractère normal (option par défaut), [N° 2] police à caractère gras. A cette liste peuvent être ajoutées, de façon programmée, n'importe quelles fontes de l'interface graphique X.11.
- le sous-menu EDITEUR (E) liste tous les éditeurs présentés précédemment. A cette liste peut (peuvent) être ajouté(s) de façon programmée, le(s) éditeur(s) particulier(s) développé(s) par l'utilisateur.
- le sous-menu MOTIF (P) liste les divers motifs disponibles (noir, blanc, gris, damier, rayures, etc..).
- le sous-menu MANIPULATION (M) liste les actions disponibles concernant la manipulation d'objets graphiques (sous-parties et squelette) dans une partie sélectionnée à savoir assembler, disjoindre, copier, coller, effacer, détruire l'objet sélectionné, détruire le squelette de la partie.
- le sous-menu AJOUT-OBJET (A) liste les objets graphiques disponibles (texte, chaîne de caractères, ligne, cercle, ellipse, carré, rectangle, icone, etc...) ainsi que la rubrique spéciale "partie de page". La sélection de cette rubrique permet d'ajouter une partie (ou une sous-partie) à une page (ou une partie). Dans ce cas la partie sélectionnée est manipulée comme un objet graphique (et donc des repères noirs sont affichés sur le contour rectangulaire de la partie tant qu'elle est sélectionnée).
- Le sous-menu SQUELETTE (S) liste les actions disponibles concernant le formulaire et/ou la page en cours à savoir :
. Retour au mode remplissage, c'est à dire la sortie du menu "CREATION",

. Sauver le formulaire (avec les trois options : mode 1, 2 ou 3).
. Voir/Modifier la partie.
. Changer le titre de la page.
. Réafficher la page.
. Détruire tout le formulaire.
. Détruire la page courante.
. Ajouter une page au formulaire.
. Manipuler les sous-parties de la partie ou page sélectionnée comme des objets graphiques ou des zones en mode construction.

La poursuite de la création du formulaire se fait par sélection souris du sous-menu AJOUT-OBJET, puis dans ce sous-menu d'un objet particulier ou de la rubrique spéciale appelée "partie de page". Dans le cas de la sélection d'un objet particulier, le restant de l'objet est construit grâce au bouton de gauche tant qu'il reste pressé, le texte étant éventuellement inséré à la position sélectionnée par le bouton. L'objet deviendra un élément du squelette de la page (ou de la partie). Dans le cas de la sélection de la rubrique "partie de page", au sous-menu AJOUT-OBJET, l'utilisateur pourra construire le rectangle contour avec la souris (à l'aide du bouton de gauche), choisir l'éditeur associé, éventuellement le motif et/ou la fonte utilisée.

La sélection de la rubrique "Voir/Modifier la partie" du sous-menu SQUELETTE entraine l'affichage d'une zone (ici une fenêtre de dialogue) d'information permettant la visualisation des options choisies pour la partie concernée en ce qui concerne certaines fonctions ou attributs notamment l'éditeur (E), la fonction d'action de post-validation (FAV), la fonte (F), les conditions de remplissage (FO), la fonction d'action de pré-affichage (FAA), la fonction de priorité (PR) et le champ utilisateur (UF). Comme illustré à la figure 3, ces options apparaissent dans des sous-zones rectangulaires elles-mêmes interactives et sous contrôle de l'éditeur "ligne avec défilement" (LS). L'utilisateur a ainsi la possibilité de modifier l'option choisie ou même de remplir ces sous-zones rectangulaires par exemple pour créer les liens entre le formulaire et son application.

Dans l'exemple présenté à la figure 3, la fenêtre d'information, de titre "INFORMATION", concerne l'unique partie en cours de création dans la page "toto:1". Les options affichées sont celles attribuées par défaut plus spécifiquement :
. LS pour l'éditeur.
. la valeur () ou nil pour la fonction d'action de post-validation (FAV) (absence de lien de type post-validation).
. la valeur () pour le caractère (C) (choix de la fonte N° 1 à caractère normal).
. la valeur t pour les conditions de remplissage (FO) (ceci implique que le remplissage de la partie par l'utilisateur est autorisé). Les autres options sont soit () en cas d'interdiction de remplissage par l'utilisateur, soit un numéro d'ordre "n" en cas de remplissage ordonné des parties d'une même page.
. la valeur () pour la fonction d'action-affichage (FAA) (absence de lien de type pré-affichage).
. la valeur () pour la fonction de priorité (PR), ce qui correspond à une priorité de l'utilisateur sur l'application (UF)
. la valeur () pour le champ utilisateur.

En ce qui concerne le remplissage des sous-zones (FAV), (FAA), l'utilisateur a le choix entre deux possibilités :
- indiquer le nom de la fonction d'action associée à la partie (par exemple "vérifier", "tuer-fenêtre", "opération"),
- entrer directement le programme définissant la fonction pré-établie.

La sélection de la rubrique "action" du menu temporaire "K-W" permet de faire disparaître cette fenêtre "INFORMATION" après visualisation et éventuellement modification de certaines fonctions et attributs de la zone active.

A la fin de l'opération de création, l'utilisateur aura la possibilité toujours dans le sous-menu SQUELETTE, de passer au mode remplissage ou de procéder à la sauvegarde du formulaire.

Le choix de la rubrique CHARGEMENT dans le menu "ENTREE" provoque l'apparition d'une fenêtre de dialogue permettant l'entrée du nom du formulaire recherché. Une fois retrouvé, le formulaire est affiché dans l'état et le mode choisi lors de la sauvegarde, à savoir :

    - mode 1 : mode création
    - mode 2 : mode remplissage (avec possibilité de modification interactive). Dans ce cas le passage au mode construction se fait par sélection de la rubrique CONSTRUCTION du menu "ENTREE".
    - mode 3 : mode remplissage (sans possibilité de modification interactive). Dans ce dernier cas, le choix de la rubrique CONSTRUCTION reste inopérant.

Le choix de la rubrique CONSTRUCTION dans le menu "ENTREE" entraine pour ce formulaire la mise sous contrôle du menu "CREATION" et la possibilité d'y apporter les modifications souhaitées. En particulier la sélection de la rubrique "réafficher page" du sous-menu SQUELETTE permet l'appel, le cas échéant, d'une fonction de pré-affichage.Le retour en mode remplissage étant effectué par la sélection appropriée dans le sous-menu SQUELETTE.

En mode remplissage interactif, celui-ci se fait essentiellement sous contrôle du clavier et/ou de la souris. Le déclenchement d'un éditeur de zone active se fait par déclic du bouton de gauche dans la page ou la partie concernée, la sortie étant soit automatique au relâchement du bouton soit par déclic hors de la partie. En cas de remplissage bloquant, l'utilisateur ne peut rien faire d'autre que de remplir la zone (impossibilité d'exécuter d'autres commandes et/ou d'agir dans d'autres fenêtres avant la validation du remplissage de la zone. Il est ainsi possible de suspendre une application-utilisateur après l'activation d'un formulaire interface.

Il est aisé de constater que la mise en oeuvre interactive du procédé selon l'invention conserve le principe d'autonomie du formulaire. Cependant la fenêtre d'information "INFORMATION" permet de faire sans difficulté le lien avec les application-utilisateurs. Enfin le canevas adopté dans le menu "ENTREE" mettant clairement en évidence la distinction entre les modes construction et remplissage du formulaire, rend le logiciel interactif "F" d'un accès facile pour un utilisateur novice.


**Revendications**

1. Procédé pour la génération de fenêtres de dialogue, ci-après appelées formulaires, visualisables sur un écran d'un système informatique comportant une unité centrale et une mémoire centrale chargée d'un logiciel d'exploitation, le dit écran travaillant en mode graphique multi-fenêtres, chaque fenêtre, représentable à l'écran par un contour étant munie d'un système de coordonnées locales et d'un contexte graphique, le procédé étant caractérisé en ce qu'il comporte les opérations suivantes :

1. On organise le formulaire en une ou plusieurs pages matérialisables chacune par une fenêtre d'écran,

2. On définit dans au moins une page, au moins une zone active, page ou partie de page, susceptible de réagir à au moins une unité d'information constituée par un évènement extérieur,

3. On associe à ladite zone active un ensemble de fonctions, ci-après appelées éditeur, comportant au moins une fonction de réaction de la zone active à une activation par un ou plusieurs évènements extérieurs, notamment le remplissage de ladite zone par de l'information variable, et de façon optionnelle une fonction de validation-éditeur susceptible de valider ladite activation.

2. Procédé selon la revendication 1 caractérisé en ce qu'on associe à une zone active, outre son éditeur, au moins une fonction d'action liée avec un programme d'application-utilisateur choisie parmi les suivantes :
- une fonction d'action de post-validation de l'opération de validation de ladite zone active (FAV),
- une fonction d'action de pré-affichage à l'écran d'informations visualisables et contenues dans la zone active, (FAA).

3. Procédé selon la revendication 2 caractérisé en ce que la fonction d'action de post-validation (FAV) est appelée automatiquement par la fonction de validation-éditeur.

4. Procédé selon l'une des revendications 2 et 3, caractérisé en ce que la fonction d'action de pré-affichage (FAA) est susceptible d'être appelée par le déclenchement, de façon explicite programmée ou de façon implicite par un évènement souris en mode interactif, d'une commande d'affichage sur l'écran du contenu de ladite zone.

5. Procédé selon l'une des revendications 2 à 4, caractérisé en ce que la fonction d'action de pré-affichage (FAA) est contrôlée par une fonction de priorité (PR) en réponse à la présence (priorité application) ou l'absence (priorité utilisateur) d'information variable dans ladite zone au moment de l'appel de la fonction de pré-affichage.

6. Procédé selon l'une des revendications précédentes, caractérisé en ce que l'éditeur est soit sélectionné à partir d'éditeurs pré-établis, soit réalisé en tant qu'éditeur spécifique-utilisateur (EU) par programmation notamment à partir desdits éditeurs pré-établis.

7. Procédé selon la revendication 6, caractérisé en ce que les éditeurs pré-établis comportent chacun une fonction principale d'édition choisies parmi les suivantes : ligne (LN), ligne avec défilement (LS), texte écran cadré à gauche (SN), texte écran avec défilement (TS), texte écran centré (SC), menu (MN), croix (CR), sélection-brillance (SL), déclic (CL), graphique (GR), menu temporaire (PM), barre de défilement horizontale (SH) ou verticale (SV).

8. Procédé selon l'une des revendications 2 à 7 caractérisé en ce qu'on associe à ladite zone active d'une part un éditeur comportant une fonction de validation-éditeur et, d'autre part, comme fonction d'action de post-validation, une fonction d'échappement entrainant la sortie de l'éditeur c'est à dire l'arrêt de la prise en compte par l'éditeur de l'arrivée sur la zone de nouveaux évènements extérieurs.

9. Procédé selon l'une des revendications 2 à 8 caractérisé en ce que d'une part on associe à ladite page plusieurs parties ou zones actives, d'autre part on associe auxdites zones actives une fonction d'ordre de remplissage (FO), la validation du remplissage d'une zone déclenchant automatiquement le remplissage de la zone suivante, ladite fonction d'ordre autorisant ou non le bouclage du remplissage.

10. Procédé selon l'une des revendications précédentes caractérisé en ce qu'on associe à une zone active au moins un champ utilisateur (UF) extérieur à ladite zone et susceptible de recevoir de l'information destinée à l'utilisateur.

11. Procédé selon l'une des revendications précédentes caractérisé en ce qu'on attache à ladite zone au moins un objet graphique tel qu'une icone, un dessin, une chaîne de caractères, un texte, ledit objet étant soit rendu actif par association avec un éditeur, soit maintenu inerte sans association avec un éditeur.

12. Procédé selon l'une des revendications précédentes caractérisé en ce qu'on présente lesdites fenêtres d'écran et lesdites zones actives sous la forme d'extensions de structures graphiques rectangulaires variables en taille et en position, ces extensions étant réalisées par association d'information variable, inerte ou active sous le contrôle d'un éditeur.

13. Procédé selon l'une des revendications précédentes caractérisé en ce qu'on utilise, dans les zones actives, la récursivité au niveau page et partie pour définir des sous-parties ou sous-zones actives de façon à associer à une page une partie ou à une sous-partie les fonctions et/ou les autres attributs définis en relation à des zones actives dans les revendications précédentes.

14. Procédé selon l'une des revendications précédentes caractérisé en ce que lesdits évènements extérieurs proviennent du clavier et/ou d'un périphérique d'entrée de type pointeur tel une souris.

15. Procédé selon l'une des revendications précédentes caractérisé en ce que la génération des formulaires est obtenue soit par la création de toutes pièces, soit par la modification ou reconstruction d'un formulaire préexistant.

16. Procédé selon l'une des revendications précédentes caractérisé en ce que la génération des formulaires est obtenue soit de façon programmée par l'utilisation d'un langage de programmation dont l'interface programmée est chargée dans ledit système informatique, soit de façon interactive à l'écran.

17. Procédé selon l'une des revendications 1 à 15 caractérisé en ce qu'il est mis en oeuvre de façon programmée ou de façon interactive par l'utilisation d'un jeu d'instructions spécifiques complémentaires à celles d'un langage de programmation dont l'interface programmée est chargée dans ledit système informatique.

18. Procédé selon l'une des revendications 16 et 17 caractérisé en ce que ledit langage de programmation est de type objet interprété, par exemple un langage LISP étendu objet.

19. Procédé selon les revendications 18 caractérisé en ce que la génération interactive est obtenue par un logiciel permettant la réalisation selon le choix de l'utilisateur d'une des opérations suivantes : création de formulaire, modification de formulaire, remplissage de formulaire.

20. Procédé selon l'une des revendications 15 à 19 caractérisé en ce qu'on associe, à ladite zone active une fenêtre d'information affichable à l'écran permettant d'une part l'association, à ladite zone active de façon interchangeable de fonctions spécifiques ou d'attributs appartenant à des catégories prédéfinies, d'autre part la visualisation de l'identification desdites fonctions et desdits attributs associés à ladite zone.

21. Procédé selon la revendication 20 prise en combinaison avec l'ensemble des revendications 1 à 10, caractérisé en ce que lesdites catégories prédéfinies sont choisies parmi les suivantes éditeur (E), fonction d'action de post-validation (FAV), fonction d'action de pré-affichage (FAA), fonction priorité (PR), champ-utilisateur (UF), fonction d'ordre de remplissage (FO).

22. Procédé selon l'une des revendications précédentes caractérisé en ce qu'il est utilisé à la génération de masques de saisie ou d'affichage de données à l'écran du système informatique.

23. Dispositif pour la mise en oeuvre du procédé selon l'une des revendications précédentes caractérisé en ce qu'il comporte :
- un système informatique présentant une unité centrale et une mémoire centrale chargé d'un logiciel d'exploitation,
- ledit système comportant au moins un écran travaillant en mode graphique multi-fenêtres, et au moins un périphérique d'entrée capable de déplacer un pointeur sur ledit écran,
- une interface programmée d'un langage de programmation chargée dans ledit système,
- un ensemble de logiciels développés, au moins en partie, dans ledit langage de programmation selon les spécifications définies dans l'une ou plusieurs des revendications 1 à 21.

# FIG.1

R1 R2 SUP R3

R1 R2 Base de Donnees R3

CHOISIR UNE OPERATION

FICHIER BASE
↑ nouvel employe
voir/modifier employe
FICHIER BASE

R1 R2 R3

"F"

R1 R2 information employe R3

Nom: toto ⌐ P1

Prenom: marc ⌐ P2

Adresse: rue des bains
75010 PARIS ⌐ P3

Salaire: 000000 ⌐ P4

Service: DEA ⌐ P5

SORTIR VALIDER
⌐ P6 ⌐ P7

# FIG_2

R3

R1 R2 R3

"F"

R1 R2     toto:1     R3

F    FONTE
- N° 1
- N° 2

| F | | FONTE | |
|---|---|---|---|
| E | | EDITEUR | |
| P | | MOTIF | |
| M | | MANIPULATION | |
| A | | AJOUT-OBJET | |
| S | | SQUELETTE | |

# FIG_3

| R1 | R2 | toto: 1 | R3 |

| R1 | R2 | INFORMATION | R3 |

(E) Editeur :           LS

(FAV). Validation :      ( )

(F). Fonte :            ( )

(FO). Remplissage ( t, ( ),n ) :    t

(FAA). Affichage :        ( )

(PR). Priorité :        ( )

(UF). Utilisateur :      ( )

                 ↑    K-W
                     action
                     K-W

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 230 994  (MUELLER)<br>* Page 2, ligne 13 - page 4, ligne 31; page 6, ligne 12 - page 12, ligne 24; figures 1-3 *<br>--- | 1 | G 06 F  15/20 |
| X | EP-A-0 067 303  (BERRY)<br>* Page 2, lignes 20-34; page 6, ligne 19 - page 22, ligne 8; figures 5-8 *<br>--- | 1 | |
| A | WO-A-8 802 147  (COCHRAN)<br>* Page 4, ligne 15 - page 8, ligne 10 *<br>----- | 1,2 | |

DOMAINES TECHNIQUES
RECHERCHES (Int. Cl.4)

G 06 F   15/20
G 06 F   15/40

Le présent rapport a été établi pour toutes les revendications

| Lieu de la recherche | Date d'achèvement de la recherche | Examinateur |
|---|---|---|
| LA HAYE | 26-09-1989 | CHUGG D.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.........................................................................................

& : membre de la même famille, document correspondant

EPO FORM 1503 03.82 (P0402)